# EUROPÄISCHE PATENTSCHRIFT

(11) **EP 1 529 328 B1**
(45) Veröffentlichungstag und Bekanntmachung des Hinweises auf die Patenterteilung: **30.09.2009**
(21) Anmeldenummer: 03792127.7
(22) Anmeldetag: 01.08.2003
(51) Int. Cl.: H02H 7/26, H02H 7/30, H02H 9/02

(54) **ELEKTRISCHES NETZ FÜR UNTER- UND ÜBERWASSERFAHRZEUGE, Z.B. MARINESCHIFFE, SOWIE FÜR OFFSHOREANLAGEN**
ELECTRICAL NETWORK FOR SURFACE AND SUBMARINE VESSELS FOR EXAMPLE NAVAL SHIPS AND FOR OFFSHORE UNITS
RESEAU ELECTRIQUE POUR VEHICULES DE SURFACE ET SOUS-MARINS, P. EX. NAVIRES DE LA MARINE, ET POUR INSTALLATIONS EN HAUTE MER

(30) Priorität: 16.08.2002 DE 10237549
(43) Veröffentlichungstag der Anmeldung: 11.05.2005
(73) Patentinhaber: SIEMENS AKTIENGESELLSCHAFT, 80333 München (DE)
(72) Erfinder: MAIER, Reinhard, 91074 Herzogenaurach (DE); WACKER, Bernd, 91074 Herzogenaurach (DE); VOGEL, Reinhard, 91074 Herzogenaurach (DE); AHLF, Gerd, 91369 Wiesenthau (DE); RZADKI, Wolfgang, 21509 Glinde (DE)
(86) Internationale Anmeldenummer: PCT/DE2003/002595
(87) Internationale Veröffentlichungsnummer: WO 2004/019464

(56) Entgegenhaltungen:
- WO-A-02/15361

## Beschreibung

Die Erfindung bezieht sich auf ein elektrisches Netz für Unter- und Überwasserfahrzeuge, z.B. Marineschiffe, sowie für Offshoreanlagen, das als elektrisches Bord- und/oder Fahrnetz aus AC-, DC- oder AC- und DC-Netzen ausgebildet ist und Elektroenergieerzeugungseinheiten, Verteileranlagen und Verbrauchereinheiten aufweist.

Derartige elektrische Netze gewinnen zunehmend Bedeutung, da in steigendem Ausmaß dieseldirektangetriebene Schiffe durch vollelektrische Schiffe verdrängt werden. Der Grund hierfür liegt darin, dass im Falle vollelektrischer Schiffe besondere Vorzüge im Schiffsdesign zur Geltung gebracht werden können.

Derartige elektrische Netze für Unter- und Überwasserfahrzeuge sowie für Offshoreanlagen müssen hohen Anforderungen an die Standfestigkeit, die Manövrierfähigkeit, die Verfügbarkeit und die Zuverlässigkeit genügen.

Als Inselnetze werden sie zumeist aus mindestens zwei Elektroenergieerzeugungseinheiten, wie z.B. Generatoren, Brennstoffzellenanlagen, Hochleistungsbatterien, Solarzellen oder Kombinationen davon, gespeist.

Zu ihnen gehören elektrische Verteileranlagen mit teilweise hohen Betriebsströmen, da häufig Niederspannungsschaltanlagen <1kV eingesetzt werden. An die elektrischen Anlagen derartiger Netze werden im Falle eines Kurzschlußereignisses hohe thermische und dynamische Anforderungen gestellt.

Bedingt durch die Gestaltung des elektrischen Schutzkonzeptes ist mit Spannungseinbrüchen zu rechnen, welche bis zum Black-Out des elektrischen Netzes führen können. Das bedeutet, dass in bestimmten Situationen auch die Generatorschalter auslösen. In einem vollelektrischen Schiff hat dies die Manövrierunfähigkeit zur Folge, da die Schiffsantriebe dann nicht mehr versorgt werden können; dies kann bis zum Verlust des Schiffes führen.

Insbesondere im Falle von Marineschiffen treten häufig multiple Fehler auf, z.B. im Falle eines oder mehrerer Raketentreffer, bei dem bzw. bei denen verschiedene Abschnitte bzw. Schalttafeln betroffen sind und deren Vorhersage nicht möglich ist, um entsprechende manuelle oder automatische Umschaltungen vornehmen zu können.

Durch Spannungseinbruch im gesamten elektrischen Netz kommt es zur Beeinflussung des elektronischen Equipments der Automatisierungs- und Steuerungstechnik im Bereich von bis zu einigen 10 bis einigen 100 ms, z.B. kann die Reaktionszeit im Hauptbereich zwischen 0,03 und 6 s betragen. Sofern das elektronische Equipment nicht unterbrechungsfrei, z.B. über static transfer switch von einer Batterie über Wechselrichter gespeist, versorgt ist, kommt es zum Ausfall des elektronischen Equipments, was einen Wiederstart beispielsweise der Betriebssysteme erfordert, welcher weitere Zeit in Anspruch nimmt.

Aus dem Stand der Technik sind die im folgenden angegebenen Maßnahmen bekannt, mittels denen die Verfügbarkeit und die Ausfallsicherheit des derart gestalteten elektrischen Netzes erhöht werden kann. Die Elektroenergieerzeugungseinheiten sowie die Verbrauchereinheiten werden auf unterschiedliche Schiffssicherheitsabschnitte aufgeteilt. Einzelne Schaltanlagenabschnitte sind durch Kupplungen, die direkt in einer Schaltanlage in einem Feld als Leistungsschalterfeld angeordnet sind, oder Überleitungen, bei denen in jeder Schaltanlage ein Leistungsschalter vorgesehen ist, die mit einer Kabelstrecke verbunden sind, miteinander verbunden.

Die elektrischen Netze sind als Ringnetze oder Strahlennetze mit zum Teil hohem Vermaschungsgrad ausgebildet, wobei Umschaltungseinrichtungen, z.B. in Form automatischer Schnellumschaltungen, vorgesehen sind, um den Redundanzanforderungen im geplanten Betrieb gerecht zu werden.

Elektrischer Schutz ist als Sekundärschutz realisiert, bei dem Selektivität zumeist durch Strom- und Zeitstaffelung erreicht wird. Es wird auf die Auslöser der im Primärkreis befindlichen Leistungsschalter eingewirkt. In kleineren Abzweigungen können auch Sicherungen als Primärschutz vorgesehen sein.

Teilnetze des elektrischen Netzes können schaltanlagentechnisch galvanisch getrennt werden, z.B. durch Leistungsschalter, deren Ausschaltvermögen begrenzt ist.

Darüber hinaus ist eine komponententechnische galvanische Trennung der Schaltanlagenteile durch Transformatoren, DC/DC- oder durch rotierende AC/AC-, DC/AC- oder AC/DC-Umformer möglich.

Durch Dokument WO-A-0215361 ist ein weiteres elektrisches Netz, des HTSL-Begrenzer aufweist, bekannt.

Mit den vorstehend genannten, aus dem Stand der Technik bekannten Maßnahmen wird jedoch nicht die Möglichkeit gegeben, Spannungseinbrüche im Kurzschlußfall sicher auszuschließen.

Der Erfindung liegt die Aufgabe zugrunde, eingangs geschilderte elektrische Netze für Unter- und Überwasserfahrzeuge, z.B. Marineschiffe, sowie für Offshoreanlagen derart weiterzubilden, dass auch im Falle von Kurzschlußfällen jedwede Beschädigungen der elektronischen Ausrüstung der Automatisierungs- und Steuerungstechnik zumindest eines Teiles 4 des Netzes zuverlässig ausgeschlossen werden können.

Diese Aufgabe wird erfindungsgemäß durch ein elektrische Netz gemäß Anspruch 1 gelöst.

Bei bestimmten Anforderungsprofilen an die Strombegrenzungsgeräte kann es sinnvoll sein, dass jeweils ein HTSL-Strombegrenzer und ein Halbleiterschalter und/oder ein konventioneller mechanischer Leistungsschalter miteinander kombiniert werden, wobei mittels derartig ausgestalteter Strombegrenzungsgeräte insbesondere Energiequellen in Form von Elektroenergieerzeugungseinheiten oder Energiespeichern geschützt werden können.

Derartige Strombegrenzungsgeräte haben die Eigenschaft, bereits den Stoßkurzschlussstrom zu begrenzen, d.h., sie arbeiten bereits im Stromanstieg. Ihr Einsatz in Netzkupplungen oder Netzüberleitungen ist in einem Strahlennetz mit Strom/Zeitstaffelung, wie es heutzutage auf Marineschiffen üblich ist, besonders günstig, und zwar insbesondere dann, wenn eine sichere galvanische Trennung erreicht werden kann. Auf diese Art und Weise wird sichergestellt, dass das nicht betroffene Teilnetz keinen bedeutenden Spannungseinbruch erfährt und eine sichere Versorgung der Verbrauchereinheiten in hohem Ausmaß aufrecht erhalten wird.

HTSL-Srombegrenzer können vorteilhaft mit auf die ihnen zugeordneten Leistungsschalter wirkenden Sekundärschutzeinrichtungen kombiniert sein, indem ein vom HTSL-Strombegrenzer generiertes Signal auf diese wirkt.

Die vorstehend genannten Strombegrenzungsgeräte können zur Ausgestaltung eines völlig neuen Netzkonzepts eingesetzt werden, wobei das elektrische Netz vorzugshalber so aufgebaut werden kann, dass die Strombegrenzungsgeräte in einer Anordnung vorgesehen sind, mittels der eine Stromselektivität erreicht wird. Zur Vermeidung eines Spannungseinbruchs oder zu dessen Verringerung ist es erforderlich, für bestimmte Verbraucherschaltanlagen auf eine Zeitstaffelung bei bestimmten Fehlerereignissen zu verzichten. Damit wird je nach Fehlerort und Fehlerereignis jedoch sichergestellt, dass ein Teil des elektrischen Fahr- bzw. Bordnetzes nahezu unbeeinflußt bleibt, zumindest dass der Spannungseinbruch so gering ist, dass es zu keiner Beeinträchtigung der Verbrauchereinheiten kommt. Ist das elektrische Netz so konzipiert, dass ein Teilnetz nahezu unbeeinflußt bleibt, so bleiben die diesem Teilnetz zugeordneten Elektroenergieerzeugungseinheiten und Schiffsantriebseinheiten unterbrechungsfrei in Betrieb; der fehlerbehaftete Teil des Netzes wird galvanisch abgetrennt.

Wesentlich für die Gestaltung eines stromselektiven Netzes ist die konsequente Ausbildung des Netzkonzeptes als Strahlennetz mit geringstmöglicher Vermaschung oder einer Vermaschung, die rückwirkungsfrei ausgestaltet ist.

Eine rückwirkungsfreie Ausgestaltung der Vermaschung ist mittels diodenentkoppelter Einspeisung von DC-Schaltanlagen oder DC-Verbrauchern von zwei verschiedenen Schiffssicherheitsabschnitten aus realisierbar.

Eine Zeitstaffelung ist dann notwendig, wenn allein das Kriterium Strom nicht mehr ausreichend ist. Für den Fall, dass trotz etwaiger Nachteile eine Vermaschung des elektrischen Netzes zweckdienlich ist, müssen für besondere Einsatzfälle besondere Schaltzustände des elektrischen Netzes als Ausgangszustand definiert werden, z.B. für einen Gefechtsfall. Mittels dieser besondere Schaltzustände kann dann ein strahlenförmiger Aufbau des elektrischen Netzes hergestellt werden, wobei hierdurch die Wirksamkeit der eingesetzten Strombegrenzungsgeräte sichergestellt wird. Das erfindungsgemäße elektrische Netz ist somit gemäß der Erfindung aus einem Normalzustand, in dem es als vermaschtes elektrisches Netz ausgebildet ist, in einen Sonderzustand umschaltbar, in dem es als Strahlennetz ausgebildet und die Wirksamkeit der Strombegrenzungsgeräte gewährleistet ist.

Eine Zeitstaffelung ist nicht erforderlich, wenn die einzelnen Schaltgeräte mit einer Kommunikationseinrichtung versehen sind und im Falle des Versagens eine Meldung an einen übergeordneten Schalter abgeben, der dann ohne Zeitverzug auslöst.

Um kurze Unterbrechungszeiten sicherzustellen, muß nicht nur der Spannungseinbruch im intakten Abschnitt des elektrischen Netzes vermieden werden, sondern es ist auch erforderlich, die Fehlerstelle zu diagnostizieren und nach Möglichkeit automatisch freizuschalten. Eine manuelle Rekonfiguration benötigt längere Zeit, d.h. einen Zeitraum, der länger dauert als eine Minute. Für die automatische Freischaltung ist es erforderlich, dass die Informationen an eine Automatisierungs- und Regelungseinrichtung des elektrischen Netzes gelangen, wobei zur Automatisierungs- und Regelungseinrichtung eine On-Time-Diagnoseeinheit mit hoher Rechengeschwindigkeit gehört, die vorzugsweise selbstlernend unter Nutzung von Elementen der Fuzzy-Logik oder eines neuronalen Netzes arbeitet, da nicht alle Fehlerfälle vorprogrammiert werden können und die notwendigen Schaltbefehle logisch ausgelöst werden.

Eine geeignete Information der Automatisierungs- und Regelungseinrichtung des elektrischen Netzes über den Fehlerort wird sichergestellt, wenn an jedem potentiellen Fehlerort eine Sensor- bzw. Meldeeinheit vorgesehen ist, mittels der ein dem jeweiligen Fehlerort zugeordneter Gerätezustand bzw. eine dem jeweiligen Fehlerort zugeordnete physikalische Größe erfaßbar und an die On-Time-Diagnoseeinheit weiterleitbar ist.

Vorteilhaft sollten die Sensor- bzw. Meldeeinheiten versorgungsunabhängig von ihrem Fehlerort arbeiten.

Gemäß einer zweckmäßigen Ausführungsform der Erfindung ist die Verbindung zwischen der On-Time-Diagnoseeinheit der Automatisierungs- und Regelungseinrichtung und den Sensor- bzw. Meldeeinheiten mittels drahtgebundenen Elementen, z.B. als Kupferleitungen oder Glasfaserverbindungen ausgebildeten Steuer- oder Buskabel, realisiert. In der Weise wird auch die Steuerung der Schalter bewerkstelligt.

Für das Gesamtkonzept bezüglich der Information über den Anlagenzustand sowie bezüglich der Steuerung ist eine dezentrale Back-up-Lösung wichtig. In einem Schiffsnetz sind Elektroenergieerzeugungseinheiten und Verbrauchereinheiten auf Schiffssicherungsabschnitte aufgeteilt. Falls drei Schiffssicherungsabschnitte vorgesehen sind, kann es beispielsweise zur Bildung von zwei Inselnetzen kommen, wenn im mittleren Schiffssicherungsabschnitt ein Totalausfall auftritt. Eine zentrale Meldung und Steuerung der Inselnetze ist dann nicht mehr möglich, wenn die Kabelwege oder die Zentrale selbst zerstört ist.

Einsetzbar ist beispielsweise die sogenannte Power Line Communication über die Leistungskabel. Hierbei wird zumindest ein intakter Kabelweg vorausgesetzt. Ihre Wirksamkeit ist nur bei einem hohen Vermaschungsgrad gegeben, welcher jedoch aus Schutzkonzeptionsgründen nicht zweckdienlich ist. Die Zuverlässigkeit dieser Signalübertragungsart wird dadurch erhöht, dass die Signale an sich bereits kapazitiv und induktiv auf andere Adern/Phasen eines Kabels bzw. auch auf benachbarte Kabel überkoppeln. Dieses Überkoppeln kann durch Übertrager oder Koppelkondensatoren so begünstigt werden, dass die Signalübertragung damit vielfach redundant verläuft.

Eine zweckmäßigere Lösung für dieses Problem ist mit Back-up-Sensoren möglich, die drahtlos detektieren und drahtlos übertragen. Mit Hilfe dieser Back-up-Sensoren ist es möglich, eine genauere Diagnose des Anlagenzustandes zu treffen. Wenn beispielsweise die drahtgebundene Informationsübertragung nicht intakt ist, wird ein Zustand mittels des drahtlos übertragenden Back-up-Sensors gemeldet. Falls eine derartige Meldung nicht stattfindet, ist davon auszugehen, dass auch der drahtlos übertragende Back-up-Sensor zerstört ist, was ebenfalls als Grundlage für eine bestimmte Diagnose dienen kann. So kann beispielsweise aus dem zeitlichen Eingang der Signale die Fehlerursache diagnostiziert werden. Derartige drahtlos detektierende und drahtlos übertragende Back-up-Sensoren sind insbesondere deshalb vorteilhaft, da im Störungsfall immer die Möglichkeit besteht, dass Kabelverbindungen zerstört sind. Da das Schiff bzw. das elektrische Netz des Schiffes in Schiffssicherungsabschnitte unterteilt ist, müssen in jedem dieser Schiffssicherungsabschnitte dezentrale Repeater installiert werden, um die Abschirmwirkung innerhalb der Schiffssicherungsabschnitte zu umgehen.

In bestimmten Fällen kann sogar auf die vorstehend bereits erwähnten unterbrechungsfreien Stromversorgungen, wie Batterien mit statischen Transferschaltern, verzichtet werden.

Um den zunehmenden Anforderungen an die benötigte Leistung in elektrischen Fahrnetzen sowie den zunehmend verschiedenen Elektroenergieerzeugungseinheiten bzw. Energiespeichern gerecht zu werden, ist es sinnvoll, von einem reinen 3AC-Niederspannungsnetz auf andere Netzkonzepte überzuwechseln. So sind z.B. als zukünftige Elektroenergieerzeugungseinheiten Brennstoffzellen vorteilhaft, welche physikalisch bedingt Gleichspannung erzeugen. Anstelle oder zusätzlich zu Brennstoffzellen ist auch der Einsatz von Solarzellen bei entsprechenden Anforderungspraktiken denkbar. Rotierende Elektroenergieerzeugungseinheiten können mit Gleichspannung arbeiten, zumeist sind es aber, besonders bei größeren Einheiten, Drehstromgeneratoren. Als Energiespeicher kommen in den meisten Fällen Batterien zum Einsatz, zukünftig jedoch auch statische Speicher, wie Magnetspeicher und Kondensatoren, welche physikalisch bedingt mit Gleichstrom betrieben werden, oder rotierende Speicher, wie Schwungräder, welche wahlweise mit DC oder AC arbeiten.

Darüber hinaus erscheint es zweckmäßig, die primär auslösenden HTSL-Strombegrenzer mit Sekundärschutzeinrichtungen, die auf die Leistungsschalter wirken, sinnvoll zu kombinieren.

Die erfindungsgemäß im elektrischen Netz eingesetzten HTSL-Strombegrenzer sind als Primärauslöser wirksam, vergleichbar mit einer Sicherung. Das heißt, es liegt keine "externe Triggerung" durch Sekundärschutz vor. Die HTSL-Strombegrenzer sind im Normalbetrieb supraleitend, d.h. aus ihnen resultiert keine Impedanz im elektrischen Netz. Im Kurzschlußfall kommt es zu einem sprungartigen Anstieg des Ohm'schen Widerstandes des Supraleiters des HTSL-Strombegrenzers. Der Strom wird bereits in seinem Anstieg begrenzt. Nach einer definierten Zeit, z.B. einigen 10 ms, erfolgt das Unterbrechen des Stromkreises von einem in Reihe geschalteten Leistungsschalter. Dessen Schaltaufgabe besteht in der Abschaltung des begrenzten Stroms sowie der galvanischen Trennung, wobei der begrenzte Strom z.B. im Bereich des Bemessungsstroms des Leistungsschalters liegen kann. Das thermisch/dynamische Schaltvermögen dieses Leistungsschalters - je nach Einsatzfall des HTSL-Strombegrenzers auch der Leistungsschalter im Fehlerbereich, sofern keine zusätzlichen Quellen Kurzschlussstrombeiträge liefern - ist nunmehr nur noch das, was bei Bemessungs-Dauerstrom auftreten kann. Auf eine Auslegung auf Kürzschlussausschaltvermögen kann verzichtet werden. Daher können einfachere Schalter, wie z.B. Lastschalter, eingesetzt werden. Nach erfolgter Abschaltung kühlt der HTSL-Strombegrenzer zurück und wird wieder supraleitend.

Der HTSL-Strombegrenzer begrenzt den Strom auch dann, wenn der in Reihe geschaltete Leistungsschalter versagt. Der HTSL-Strombegrenzer wird zerstört, vergleichbar zu einer Sicherung. Die Energie wird innerhalb des Kryostaten umgesetzt, in dem sich der HTSL-Strombegrenzer befindet, so dass keine Lichtbogenauswirkung auf die Umgebung entsteht.

Vorteilhaft wird der HTSL-Strombegrenzer in einer Netzkupplung oder einer Netzüberleitung eingesetzt. Diese Netzkupplungen oder Netzüberleitungen wurden früher im Falle eines Gefechtsereignisses geöffnet, was zu Lasten der Verfügbarkeit des elektrischen Netzes ging. Entsprechend können die mit den HTSL-Strombegrenzern ausgerüsteten Netzkupplungen und/oder Überleitungen im Falle des erfindungsgemäß ausgestalteten elektrischen Netzes nunmehr geschlossen gefahren werden. Die einigen 10 ms Stromführung durch den HTSL-Strombegrenzer sind ausreichend, um eine Selektivität für Abzweige des elektrischen Netzes sicherzustellen. Hierzu sind die Abzweige - wie im folgenden noch näher erläutert, mit schnell agierenden Halbleiterschaltern ausgerüstet, welche innerhalb kürzester Zeit auslösen.

Ein HTSL-Strombegrenzer besteht aus einem Supraleiter, welcher nicht mit Helium gekühlt werden muß, z.B. MgB₂, YbaCuO oder Bi-Verbindungen, und kann als Bulk-Material, Bandmaterial oder Plattenmaterial mit Dünnfilmtechnik ausgeführt sein.

Bei einem HTSL-Strombegrenzer handelt es sich um ein Strombegrenzungsgerät, welches eine kryotechnische Kühlung in Form eines Refrigerators aufweist. Der HTSL-Strombegrenzer selbst ist in einem geschlossenen Behälter untergebracht, welcher eine kryogene Flüssigkeit als Bad beinhaltet. Die kryogene Flüssigkeit ist vorzugsweise Flüssigstickstoff und der zweckmäßigste Supraleiter besteht aus YbaCuO-Verbindungen, wobei der Supraleiter in Dünnfilmtechnik ausgeführt ist.
Alternativ ist auch abhängig vom Typ des Supraleiters eine andere kryogene Flüssigkeit, wie Sauerstoff, Wasserstoff, Neon, Helium, denkbar. Für den Fall, dass der Supraleiter vom Typ der LTS (Low Temperature Superconductor) ist, kommt als kryogene Flüssigkeit nur Helium in Frage.

Anstatt des HTSL-Strombegrenzers kann generell ein Halbleiterschalter eingesetzt werden und umgekehrt. Der Halbleiterschalter wird zum Strombegrenzer, wenn er in Parallelschaltung mit einer Impedanz betrieben wird. Die Impedanz kann ein Ohm'scher Widerstand oder eine Induktivität sein. Der Vorteil der Induktivität liegt darin, dass sie keine Verlustleistung in Form von abzuführender Wärme erzeugt.

Als Schaltelemente der Halbleiterschalter kommen bevorzugt IGCTs als Konstruktionsvariante zu GTOs zum Einsatz, da erstere besonders geringe Durchlassverluste aufweisen. Es sind jedoch auch IGBTs und für besonders geringe Ströme MOS-Transistoren möglich. Der Halbleiterschalter schaltet innerhalb von ca. 20µs ab, wenn sein Schaltelement als IGCT (Integrated Gate Commutated Thyristor) ausgebildet ist. IGBTs (Insulated Gate Bipolar Transistors) und MOS-Transistoren schalten noch schneller ab, haben aber im allgemeinen höhere Durchlassverluste; sie sind aufgrund ihrer Kennlinie selbst schon strombegrenzend.

IGCTs sind mit einer integrierten Treiberschaltung versehen. Es müssen nur noch eine Stromversorgung und eine potentialgetrennte Ansteuerung über Lichtleiter angeschlossen werden. Eine Kontrolle der IGCT erfolgt durch einen Monitorausgang, der ebenfalls als Lichtleiter ausgeführt ist.

Da derzeitige IGCTs häufig asymmetrische Bauelemente sind, also in Sperrrichtung keine Sperreigenschaften aufweisen, müssen sie für bidirektionalen Betrieb antiparallel geschaltet werden, wobei die Sperrung durch Dioden vorzunehmen ist. Durch Einsatz einer Brückenschaltung kann ein IGCT eingespart werden, was jedoch infolge der Notwendigkeit einer zusätzlichen Diode zu erhöhten Verlusten führt.

IGCTs sind zweckmäßigerweise durch Snubberschaltungen zu schützen. Eine solche Snubberschaltung besteht aus einer RCD-Kombination, die einen Spannungsanstieg beim Übergang aus dem leitenden in den nichtleitenden Zustand über ein zulässiges du/dt vermeidet, und einem Varistor, der die Spannung über dem IGCT auf ein höchst zulässiges Maß begrenzt. Bevorzugt ist für den Varistor ein MO-Varistor einzusetzen, da dieser eine besonders flache Kennlinie aufweist.

Die Halbleiterschalter werden sekundär angesteuert, d.h., die Fehlerstromerfassung erfolgt mittels Messung und Auswertung des Fehlerkriteriums Stromanstieg.

Ein betrieblicher Überstrom, z.B. aufgrund von Motordirektanläufen, wie Thruster, muß in die Dimensionierung der Halbleiterschalter einkalkuliert werden. Bei einem Fehlerüberstrom erfolgt die Auslösung ebenfalls über den Sekundärschutz, jedoch mit Hilfe anderer bekannter Kriterien, wie z.B. ein Schutzverfahren, das auf der Auswertung von Strom-i und Stromänderungssignal di/dt beruht. Ein Überstrom-Zeitschutz ist deshalb nicht vorteilhaft, da ein Halbleiterschalter häufig so ausgelegt ist, dass er schon weit vor Erreichen des Wertes des prospektiven Kurzschlußstromes zerstört wird und damit jegliche zeitliche Verzögerung vermieden werden muß.

Die galvanische Unterbrechung des Stromkreises erfolgt durch einen in Reihe geschalteten Leistungsschalter. Dieser Leistungsschalter kann auch die Back-up-Funktion gewährleisten, wenn der Halbleiterschalter oder seine Ansteuerung versagen.

Besonders vorteilhaft lassen sich Halbleiterschalter in Abzweigen einbauen. Da Halbleiterschalter innerhalb von µs abschalten können, lassen sie sich selektiv zu den vorstehend erläuterten HTSL-Strombegrenzern einsetzen. Der fehlerhafte Abzweig kann abgeschaltet werden, bevor der HTSL-Strombegrenzer anspricht. Die Selektivität wird über den Stromanstieg di/dt oder den Strom i erreicht. Dadurch, dass der Halbleiterschalter in µs abschaltet und der HTSL-Strombegrenzer einen Überstrom gemäß seiner i/t-Kennlinie toleriert, ergibt sich eine dimensionierbare bzw. projektierbare, jedoch bezüglich des HTSL-Strombegrenzers nicht einstellbare Staffelung. Die Sekundärschutzelemente der Halbleiterschalter können parametriert werden. Eine weitere Stromstaffelung ist dann nur möglich, wenn auch in der Netzhierarchie unten liegende Verbraucherabzweige mit Halbleiterschaltern ausgerüstet sind. Wird darauf aus Kostengründen verzichtet, so muß auf konventionelle Geräteeinheiten zurückgegriffen werden, was u.U. eine Nichtselektivität in Untergruppen zur Folge hat.

Die Diagnose gestaltet sich dann schwieriger, da ggf. die gesamte Untergruppe abgeschaltet ist, obwohl möglicherweise nur ein fehlerhafter Abzweig vorliegt. Daher ist es u.U. sinnvoll, Untergruppen diodenentkoppelt mit Gleichspannung zu versorgen.

Bei Versagen des Halbleiterschalters im Abzweig wird der Kurzschlußstrom in der Kupplung durch HTSL-Strombegrenzer begrenzt, wodurch das betroffene Teilnetz vom nicht betroffenen Teilnetz getrennt wird.

Grundsätzlich besteht auch die Möglichkeit, Halbleiterschalter in Netzkupplungen oder Netzüberleitungen einzusetzen. Eine Zerstörung eines Halbleiterschalters im Störungsfall verläuft jedoch unvorhersagbar; es kann ein Kurzschluß entstehen, z.B. durch Durchlegieren, oder aber auch eine Trennung. Damit kann der unbedingt zu vermeidende Spannungseinbruch nicht ausgeschlossen werden. Das ist z.B. ein in Reihe geschalteter Leistungsschalter, welcher auch Kurzschlussabschaltvermögen hat und über seine Sekundärschutzeinrichtungen ausgelöst wird.

Eine weitere Ausführungsvariante ist die unmittelbare Reihenschaltung eines Halbleiterschalters mit einem HTSL-Strombegrenzer, wobei die galvanische Trennung immer durch ein weiteres in Reihe zu setzendes Gerät, wie z.B. einen Leistungs- oder Lastschalter, erfolgen muß.

Mittels der mit den vorstehend beschriebenen Halbleiterschaltern und HTSL-Strombegrenzern ausgerüsteten erfindungsgemäßen elektrischen Netze lassen sich die thermischen und dynamischen Beanspruchungen der Anlagen und Geräte im Fehlerfall verringern, wodurch Verbesserungen der Personen- und Anlagensicherheit sowie eine Verringerung des Aufwands für Wartung und Instandhaltung erreichbar sind.

Eine komponententechnische galvanische Trennung der Schaltanlagenteile ist im Falle des erfindungsgemäß ausgebildeten elektrischen Netzes auch durch AC- oder Mittelfrequenzschaltnetzteile realisierbar.

Im Folgenden wird die Erfindung anhand von Ausführungsformen unter Bezugnahme auf die Zeichnung näher erläutert.

Es zeigen:
- FIGUR 1: eine Prinzipdarstellung einer ersten Ausführungsform eines erfindungsgemäßen elektrischen Netzes für Unter- und Überwasserfahrzeuge; und
- FIGUR 2: eine Prinzipdarstellung einer zweiten Ausführungsform eines erfindungsgemäßen elektrischen Netzes für Unter- und Überwasserfahrzeuge.

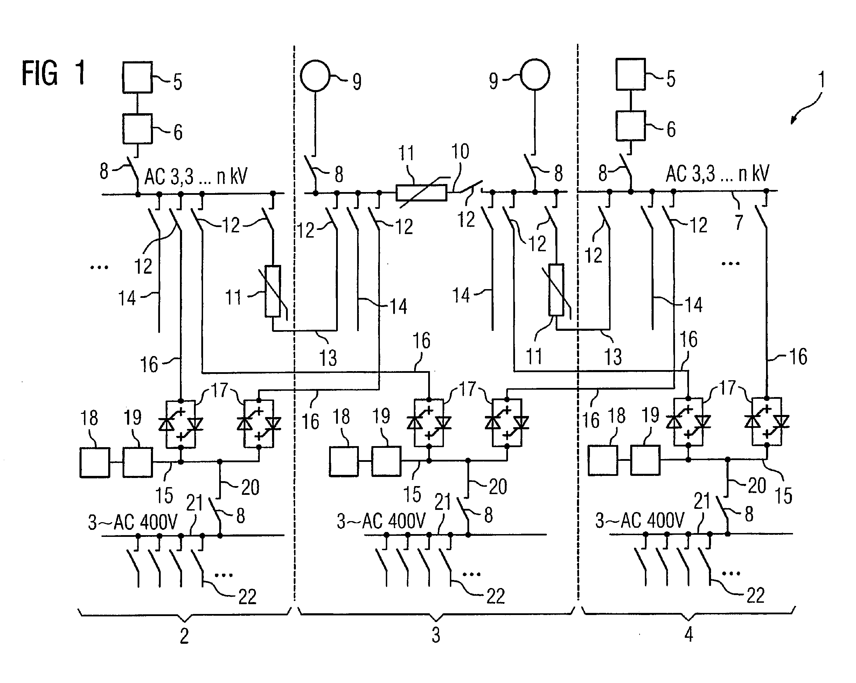

Ein in FIGUR 1 beispielhaft gezeigtes elektrisches Netz 1 kommt an Bord von Unter- oder Überwasserfahrzeugen, z.B. an Bord von Marineschiffen, zum Einsatz und ist in - im dargestellten Ausführungsbeispiel - in drei Schiffssicherungsabschnitte 2, 3 und 4 untergliedert.

Im Schiffssicherungsabschnitt 2 sowie im Schiffssicherungsabschnitt 4 ist als Elektroenergieerzeugungseinheit jeweils eine Brennstoffzelle 5 vorgesehen. Diese Brennstoffzelle 5, die einen Gleichstrom generiert, speist elektrische Energie über einen DC/AC-Wandler 6 in ein AC-Hauptnetz 7 ein. Die Netzspannung wird während der Projektierung optimiert und festgelegt und kann bis zu 15 kV betragen. In FIGUR 1 sind beispielhaft AC 3,3kV angegeben. Zwischen dem DC/AC-Wandler 6 und dem Hauptnetz 7 ist ein Leistungs- bzw. Lastschalter 8 vorgesehen.

Im Schiffssicherungsabschnitt 3 sind als Elektroenergieerzeugungseinheiten zwei Generatoren 9 vorgesehen, die über jeweils einen Leistungs- bzw. Lastschalter 8 elektrische Energie in das Hauptnetz 7 einspeisen.

Im Schiffssicherungsabschnitt 3 weist das Hauptnetz 7 eine Netzkupplung 10 auf, in der ein Strombegrenzungsgerät in Form eines HTSL-Strombegrenzers 11 angeordnet ist, dem ein Leistungsschalter 12 zugeordnet ist. Mittels der Netzkupplung 10 werden im Schiffssicherungsabschnitt 3 zwei Netzteile ausgebildet, von denen jeweils einer einem der beiden Generatoren 9 zugeordnet ist.

Zwischen dem Schiffssicherungsabschnitt 2 und dem Schiffssicherungsabschnitt 3 sowie zwischen dem Schiffssicherungsabschnitt 3 und dem Schiffssicherungsabschnitt 4 ist jeweils eine Netzüberleitung 13 vorgesehen, mittels der das Hauptnetz 7 über die Grenzen der Schiffssicherungsabschnitte 2, 3, 4 verbunden bzw. verbindbar ist. Auch in den beiden in FIGUR 1 gezeigten Netzüberleitungen 13 ist jeweils ein HTSL-Strombegrenzer 11 vorgesehen, dem seitens beider Schiffssicherungsabschnitte 2, 3 bzw. 3, 4 jeweils ein Leistungs- oder Lastschalter 12 zugeordnet ist.

Aus dem Hauptnetz 7 sind die in den FIGUREN nicht gezeigten Schiffsantriebseinheiten mit elektrischer Energie versorgbar. Dies geschieht, wie sich aus FIGUR 1 prinzipiell ergibt, mittels Abzweigen 14, die die in den FIGUREN nicht gezeigten Schiffsantriebseinheiten an das Hauptnetz 7 anschließen.

Des weiteren gehören zu dem in FIGUR 1 gezeigten elektrischen Netz Bordnetzzwischenkreise 15, von denen im in FIGUR 1 gezeigten Ausführungsbeispiel in jedem Schiffssicherungsabschnitt 2, 3 und 4 einer vorgesehen ist. Die Bordnetzzwischenkreise 15 sind über Abzweige 16 an das Hauptnetz 7 angeschlossen, wobei jeder Bordnetzzwischenkreis 15 mittels zweier Abzweige 16 an das Hauptnetz 7 angeschlossen ist und die einem Bordnetzzwischenkreis 15 zugeordneten Abzweige 16 in unterschiedlichen Schiffssicherungsabschnitten 2, 3, 4 an das Hauptnetz 7 angeschlossen sind. So ist beispielsweise der Bordnetzzwischenkreis 15 mittels eines Abzweigs 16 im Schiffssicherungsabschnitt 2 und mittels eines weiteren Abzweigs 16 im Schiffssicherungsabschnitt 3 an das Hauptnetz 7 angeschlossen. Der Bordnetzzwischenkreis 15 im Schiffssicherungsabschnitt 3 ist mittels eines Abzweigs 16 an das Hauptnetz 7 im Schiffssicherungsabschnitt 2 und mittels eines Abzweigs 16 an das Hauptnetz 7 im Schiffssicherungsabschnitt 4 angeschlossen. Der Bordnetzzwischenkreis 15 im Schiffssicherungsabschnitt 4 ist mittels eines Abzweigs an das Hauptnetz 7 im Schiffssicherungsabschnitt 4 und mittels eines Abzweigs 16 an das Hauptnetz 7 im Schiffssicherungsabschnitt 3 angeschlossen.

In jedem Abzweig 16, mittels dem ein Bordnetzzwischenkreis 15 an das Hauptnetz 7 angeschlossen ist, ist ein Halbleiterschalter 17 für bidirektionalen Strom angeordnet, dem ein Leistungsschalter 12 zugeordnet ist. Des weiteren ist in jedem Bordnetzzwischenkreis 15 ein Energiespeicher 18 vorgesehen, der über einen DC/AC-Wandler 19, der optional mit einem Transformator ausgerüstet sein kann, mit dem jeweiligen Bordnetzzwischenkreis 15 verbunden ist.

Die Bordnetzzwischenkreise 15 sind mittels Abzweigen 20, in denen jeweils ein Leistungsschalter 8 vorgesehen ist, an drei Bordnetz-Hauptgruppen angeschlossen, von denen Verbraucherabzweige 22 zu einzelnen Verbrauchern, die in den FIGUREN nicht dargestellt sind, führen. Spannung und Frequenz der Bordnetz-Hauptgruppen richten sich nach den Anforderungen der angeschlossenen Verbraucher und sind in FIGUR 1 beispielhaft mit 3~AC 400 V angegeben.

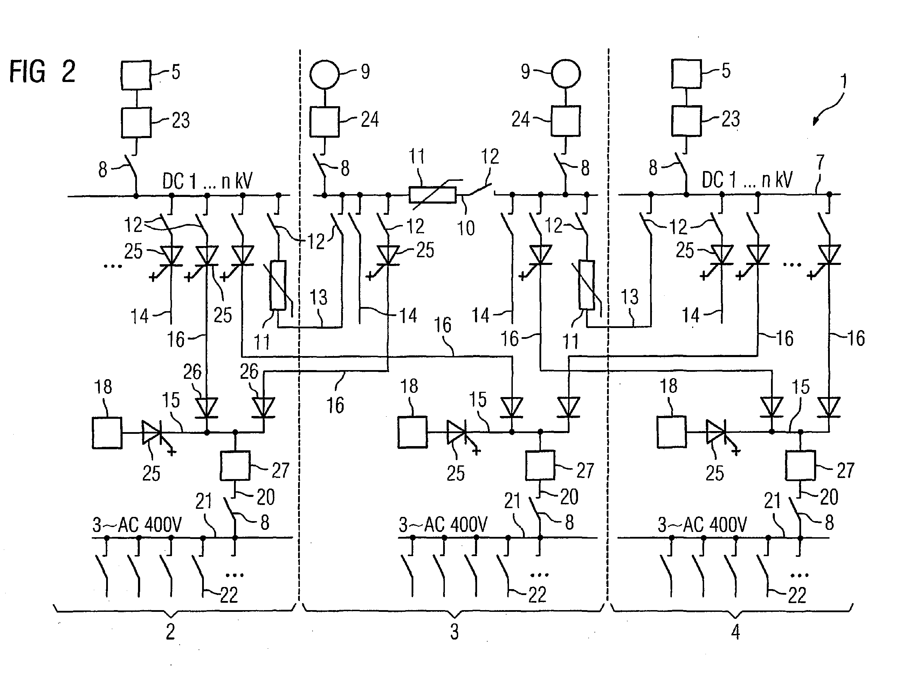

Das in FIGUR 2 gezeigte elektrische Netz 1 hat ein DC-Hauptnetz, welches entsprechend der anhand FIGUR 1 gezeigten Ausführungsform ebenfalls in die drei Schiffssicherungsabschnitte 2, 3 und 4 untergliedert ist. Die Spannung des Bordnetzes 7 richtet sich nach den Anforderungen der angeschlossenen Energieerzeugungseinheiten und der Verbraucher sowie an die Gesamtleistung des Netzes und wird während der Projektierung optimiert. In FIGUR 2 ist beispielhaft der Bereich DC...nkV angegeben.

In den Schiffssicherungsabschnitten 2 und 4 ist jeweils der Brennstoffzelle 5 ein DC/DC-Wandler bzw. DC/DC-Hochsetzsteller 23 zugeordnet, über die die Brennstoffzellen 5 elektrische Energie in das DC1..nkV-Hauptnetz 7 einspeisen. Entsprechend sind die beiden im mittleren Schiffssicherungsabschnitt 3 vorgesehenen Generatoren 9 über AC/DC-Wandler bzw. Gleichrichter 24 an das Hauptnetz 7 angeschlossen. Jeder Elektroenergieerzeugungseinheit 5, 9 ist des weiteren ein Leistungs- bzw. Lastschalter 8 zugeordnet. Dieser Leistungsschalter 7 oder ein weiterer Leistungsschalter kann auch zwischen Generator und dem Gleichrichter bzw. AC/DC-Umrichter 24 angeordnet sein.

Die Ausgestaltung des Hauptnetzes 7 mit der im Schiffssicherungsabschnitt 3 vorgesehenen Netzkupplung 10 und den beiden Netzüberleitungen 13 zwischen dem Schiffssicherungsabschnitt 2 und dem Schiffssicherungsabschnitt 3 bzw. dem Schiffssicherungsabschnitt 3 und dem Schiffssicherungsabschnitt 4 entspricht derjenigen des in FIGUR 1 gezeigten elektrischen Netzes 1.

Über die Abzweige 14 werden aus dem Hauptnetz 7 heraus die Schiffsantriebseinheiten, die in FIGUR 2 nicht gezeigt sind, mit elektrischer Energie versorgt. Es sei darauf hingewiesen, dass die beiden im Schiffssicherungsabschnitt 2 und im Schiffssicherungsabschnitt 4 angeordneten, zu den Schiffsantriebseinheiten führenden Abzweige 14 mit Halbleiterschaltern 25 für unidirektionalen Strom versehen sind, denen jeweils ein Leistungsschalter 12 zugeordnet ist.

Aus dem DC-Hauptnetz 7 werden des weiteren die drei Bordnetzzwischenkreise 15 mit elektrischer Energie versorgt. Hierzu ist der Bordnetzzwischenkreis 15 im Schiffssicherungsabschnitt 2 über einen Abzweig 16 an das Hauptnetz 7 im Schiffssicherungsabschnitt 2 und über einen Abzweig 16 an das Hauptnetz 7 im Schiffssicherungsabschnitt 3 angeschlossen. In jedem dieser beiden Abzweige 16 ist ein Halbleiterschalter 25 für unidirektionalen Strom in Kombination mit einem Leistungsschalter 12 und einer Diode 26 angeordnet, wobei es sich bei der Diode 26 um ein optionales Bauteil handelt, das der Entkopplung der Leitungen zwischen verschiedenen Schiffssicherungsabschnitten im Fehlerfall dient.

Der Bordnetzzwischenkreis 15 im Schiffssicherungsabschnitt 3 ist über ebenfalls zwei wie vorstehend beschrieben ausgestaltete Abzweige 16 an das Hauptnetz 7 im Schiffssicherungsabschnitt 2 und im Schiffssicherungsabschnitt 4 angeschlossen. Entsprechend ist der Bordnetzzwischenkreis 15 im Schiffssicherungsabschnitt 4 über zwei wie vorstehend beschrieben ausgestaltete Abzweige 16 an das Hauptnetz 7 im Schiffssicherungsabschnitt 3 und im Schiffssicherungsabschnitt 4 angeschlossen.

Den Bordnetzzwischenkreisen 15 in den Schiffssicherungsabschnitten 2, 3 und 4 ist jeweils ein Energiespeicher 18 zugeordnet, der über einen Halbleiterschalter 25 für unidirektionalen Strom ge- bzw. entladen wird.

Der Bordnetzzwischenkreis 15 jedes Schiffssicherungsabschnitts 2, 3 und 4 ist über einen Abzweig 20 an drei ∼AC400V-Bordnetz-Hauptgruppen 21 angeschlossen, wobei in jedem Abzweig 20 ein DC/AC-Wandler bzw. -Tiefsetzsteller 27 in Verbindung mit einem Leistungsschalter 8 angeordnet ist.

Über die Verbraucherabzweige 22 werden aus den Bordnetz-Hauptgruppen 21 die einzelnen Verbraucher mit elektrischer Energie versorgt.

Bei den in den FIGUREN 1 und 2 näher erläuterten elektrischen Netzen 1 sind die in den unterschiedlichen Schiffssicherheitsabschnitten 2, 3 und 4 angeordneten Netzteile in geeigneter Weise miteinander gekuppelt. Für den Fall eines Kurzschlusses im Schiffssicherheitsabschnitt 2 wird der Kurzschlussstromanteil aus dem Schiffssicherheitsabschnitt 3 durch den HTSL-Strombegrenzer 11 in der Netzüberleitung 13 zwischen dem Schiffssicherheitsabschnitt 2 und dem Schiffssicherheitsabschnitt 3 begrenzt; durch diese Netzüberleitung 13 zwischen dem Schiffssicherheitsabschnitt 2 und dem Schiffssicherheitsabschnitt 3 fließt nur noch der begrenzte Strom, damit bleiben der Schiffssicherheitsabschnitt 3 und der Schiffssicherheitsabschnitt 4 ohne spürbaren Spannungseinbruch. Der zusätzliche Betrag des begrenzten Stromes muß im Selektivschutz des Generatorschalters berücksichtigt werden, d.h. ggf. Überstrom über den Generatorschalter.

Ist im Schiffssicherheitsabschnitt 2, z.B. im Abzweig 20, ein Kurzschluß, so ist mittels der Halbleiterschalter 17 bzw. 25 in den beiden Abzweigen 16, mittels denen der Bordnetzzwischenkreis 15 im ersten Schiffssicherungsabschnitt an das Hauptnetz 7 angeschlossen ist, eine selektive Abzweigabschaltung möglich; sofern der Spannungseinbruch kurzgehalten werden kann, kann ggf. das Hauptnetz 7 auch im Schiffssicherheitsabschnitt 2 aufrecht erhalten werden.

Grundsätzlich ist es auch möglich, die Unterverteilungen 21 ggf. über das Kriterium Strom-i und Stromänderung di/dt mit Halbleiterschaltern oder aber konventionell über Strom/Zeitstaffelung zu schützen, wobei hier die eingeleiteten Schutzmaßnahmen nach der Wichtigkeit gewählt werden.

Wenn die Unterverteilung 21 konventionell über Strom/Zeitstaffelung geschützt wird, darf der Strom niemals den für die Halbleiterschalter 17 bzw. 25 zulässigen Wert überschreiten.

Gegebenenfalls müssen in nachgeordneten Teilnetzen ebenfalls Halbleiterschalter eingesetzt werden und eine Selektivität/Back-up-Funktion über eine Kommunikation zwischen den Halbleiterschaltern gewährleistet sein.

Aufgrund der Funktion des HTSL-Strombegrenzers 11 wird die Netzüberleitung 13 zwischen dem Schiffssicherungsabschnitt 2 und dem Schiffssicherungsabschnitt 3 ausgeschaltet; sie kann unmittelbar nach Klärung des fehlerhaften Abzweigs, mittels der Halbleiterschalter 17 bzw. 25, wieder eingeschaltet werden.

Jeder HTSL-Strombegrenzer 11 hat im supraleitenden Zustand einen nicht meßbaren, vernachlässigbar kleinen elektrischen Widerstand. Im Falle eines Stromes, der oberhalb des Bemessungsstroms liegt, steigt der elektrische Widerstand des HTSL-Strombegrenzers 11 sprungartig an, bis sein supraleitender Zustand in seinen normalleitenden Zustand überwechselt. Der HTSL-Strombegrenzer bzw. dessen Supraleiter nimmt dann einen endlichen Widerstand an, bis er wieder zurückgekühlt wird.

In einem Stromnetz wird der HTSL-Strombegrenzer 11 - wie in den vorstehend beschriebenen Ausführungsbeispielen - in Verbindung mit einem galvanisch trennenden Element mit Ausschaltvermögen eingesetzt; im Falle der Ausführungsbeispiele ist als solches der Leistungsschalter 12 vorgesehen. Auch der Einsatz von Lastschaltern ist möglich.

Zum Schutz einer Elektroenergieerzeugungseinheit oder eines Verbrauchers kann eine Kombination aus einem HTSL-Strombegrenzer, einem Halbleiterschalter und einem Leistungs- bzw. Lastschalter vorteilhaft sein.

Bei den in den FIGUREN 1 und 2 gezeigten Ausführungsbeispielen des erfindungsgemäßen elektrischen Netzes 1 handelt es sich um Schiffsnetze. Als Vorzugsvariante ist die in FIGUR 2 angegebene Kombination aus AC- und DC-Netzen anzusehen.

Als Elektroenergieerzeugungseinheiten können beispielsweise Brennstoffzellen, Solarzellen, Gasturbosätze und Dieselgeneratorsätze zum Einsatz kommen.

Die Energiespeicher 18, z.B. auch Supercaps, können beispielsweise in Form von Batterien, Kondensatoren, Schwungradgeneratoren, supraleitenden Magnetenergiespeichern etc. ausgeführt sein, wobei allen genannten Energiespeichern im Falle der in FIGUR 2 gezeigten Vorzugsvariante gemeinsam ist, dass sie über Halbleiterschalter 25 zur Reserveenergieeinspeisung an die zugeordnete Verbraucherebene zugeschaltet werden müssen.

Es sind verschiedene vorzugshalber zu verwendende Spannungsebenen, vorzugshalber für entsprechende Übertragungsleistungen, möglich:
- >1MVA in Mittelspannung DC 1kV bis DC 15kV, vorzugshalber jedoch DC 1kV bis DC 6kV,
- >1MVA in Mittelspannung 16 2/3Hz oder 50Hz oder 60 Hz Wechselstrom- oder Drehstromsystem AC 1kV bis AC 24kV, vorzugshalber jedoch in den Spannungsreihen nach ANSI oder IEC; z.B. nach IEC 3∼AC 3,6kV; 3∼AC 7,2kV; 3∼AC 12kV; 3∼AC 17,5kV; 3∼AC 24kV,
- <1MVA bis zu mehreren MVA in Niederspannung <1kV, vorzugshalber jedoch in den bekannten 60Hz bzw. 50Hz AC Betriebsspannungen, z.B. 380V, 400V, 415V, 480V, 690V jeweils AC oder z.B. DC 220V, 440V, 660V, 880V oder aber verschiedene Bereiche abdeckend, da bestimmte Elemente, z.B. Batterien, eine stark ladezustandsabhängige und Brennstoffzellensysteme eine stark stromabhängige Spannungskennlinie haben.

Das Schiffsnetz hat ein Erdungs- und Potentialsystem, welches nach einer der Varianten nach VDE DIN bzw. IEC ausgeführt wird; vorzugsweise hat das Schiffsnetz einen isolierten Sternpunkt bei AC-Mittel- bzw. -Niederspannung, wobei für Gleichspannungsnetze ebenfalls ein isoliertes System (IT-Netz) möglich ist. Das isolierte System ist bevorzugt, weil ein Erdschluß einer Phase nicht sofort zum Kurzschluß führt.

Die HTSL-Strombegrenzer können an Quellen, z.B. an Generatoren, Batterien, Brennstoffzellen od. dgl., angeordnet werden, vorzugshalber sind sie jedoch in Kupplungen oder Überleitungen anzuordnen.

Die Halbleiterschalter können ebenfalls an Quellen, z.B. Generatoren, Batterien, Brennstoffzellen, in Kupplungen oder Überleitungen angeordnet werden; vorzugsweise können derartige Halbleiterschalter jedoch in Abzweigen mit unidirektionaler Stromrichtung angeordnet werden, wobei sie so dimensioniert werden, dass ein selektiver Schutz realisiert werden kann.

## Patentansprüche

1. Elektrisches Netz für Unter- und Überwasserfahrzeuge, z.B. Marineschiffe, sowie für Offshoreanlagen, das als elektrisches Bord- und/oder Fahrnetz aus AC-, DC- oder AC- und DC-Netzen ausgebildet ist und Elektroenergieerzeugungseinheiten, Verteileranlagen und Verbrauchereinheiten aufweist, wobei das elektrische Netz (1) Strombegrenzungsgeräte aufweist, die als HTSL(hochtemperatursupraleitende)-Strombegrenzer (11) und/oder Halbleiterschalter (17, 25) ausgebildet sind und mittels denen die Rückwirkung von Spannungseinbrüchen im Kurzschlussfall auf nicht betroffene Netzteile auf eine Zeitspanne im niedrigen Millisekundenbereich, insbesondere <1ms, begrenz- und damit derartige Spannungseinbrüche auf das jeweils betroffene Netzteil beschränkbar sind, **dadurch gekennzeichnet, dass** das elektrische Netz aus einem Normalzustand, in dem es als vermaschtes elektrisches Netz ausgebildet ist, in einen Sonderzustand umschaltbar ist, in dem es als Strahlennetz ausgebildet und in dem die Wirksamkeit der Strombegrenzungsgeräte gewährleistet ist.

2. Elektrisches Netz nach Anspruch 1, mit Strombegrenzungsgeräten, zu denen jeweils ein HTSL-Strombegrenzer (11) und ein Halbleiterschalter (17, 25) und/oder ein Leistungsschalter (12) gehören, mittels denen insbesondere Energiequellen in Form von Elektroenergieerzeugungseinheiten und/oder Energiespeichern (18) schützbar sind.

3. Elektrisches Netz nach Anspruch 1 oder 2, dessen HTSL-Strombegrenzer (11) mit auf die Leistungsschalter (12) wirkenden Sekundärschutzeinrichtungen kombiniert sind, indem ein vom HTSL-Strombegrenzer (11) generiertes Signal auf diese wirkt.

4. Elektrisches Netz nach einem der Ansprüche 1 bis 3, das als Strahlennetz mit Strom/Zeitstaffelung ausgebildet ist, in dessen Netzkupplungen (10) und/oder -überleitungen (13) die Strombegrenzungsgeräte angeordnet sind.

5. Elektrisches Netz nach einem der Ansprüche 1 bis 4, dessen Strombegrenzungsgeräte so angeordnet sind, dass mittels ihnen im Zusammenwirken mit der Netzkonfiguration Stromselektivität erreichbar ist.

6. Elektrisches Netz nach einem der Ansprüche 1 bis 5, das als Strahlennetz mit geringstmöglicher Vermaschung konzipiert ist.

7. Elektrisches Netz nach einem der Ansprüche 1 bis 5, das als Strahlennetz mit einer rückwirkungsfreien Vermaschung konzipiert ist.

8. Elektrisches Netz nach Anspruch 7, bei dem die rückwirkungsfreie Vermaschung mittels diodenentkoppelter Einspeisung von DC-Schaltanlagen oder DC-Verbrauchern von zwei verschiedenen Schiffssicherheitsabschnitten (2, 3, 4) aus realisiert ist.

9. Elektrisches Netz nach einem der Ansprüche 1 bis 8, dessen einzelne Schaltgeräte eine Kommunikationseinrichtung aufweisen, mittels der bei Versagen des Schaltgeräts ein übergeordneter, ohne Zeitverzug auslösender Schalter kontaktierbar ist.

10. Elektrisches Netz nach einem der Ansprüche 1 bis 9, dessen Automatisierungs- und Regelungseinrichtung eine On-Time-Diagnoseeinheit mit hoher Rechengeschwindigkeit aufweist, die vorzugsweise selbstlernend unter Nutzung von Elementen einer Fuzzy-Logik oder eines neuronalen Netzes arbeitet.

11. Elektrisches Netz nach Anspruch 10, bei dem an jedem potentiellen Fehlerort eine Sensor- bzw. Meldeeinheit vorgesehen ist, mittels der ein dem jeweiligen Fehlerort zugeordneter Gerätezustand bzw. eine dem jeweiligen Fehlerort zugeordnete physikalische Größe erfassbar und an die On-Time-Diagnoseeinheit der Automatisierungs- und Regelungseinrichtung weiterleitbar ist.

12. Elektrisches Netz nach Anspruch 11, bei dem die Sensor- bzw. Meldeeinheiten versorgungsunabhängig von ihren Fehlerorten sind.

13. Elektrisches Netz nach Anspruch 11 oder 12, bei dem die Verbindung zwischen der On-Time-Diagnoseeinheit der Automatisierungs- und Regelungseinrichtung und den Sensor- bzw. Meldeeinheiten mittels drahtgebundenen Elementen, z.B. als Kupferleitungen oder Glasfaserleitungen ausgebildeten Steuer- oder Buskabeln, realisiert ist.

14. Elektrisches Netz nach einem der Ansprüche 11 bis 13, mit drahtlos detektierenden und drahtlos übertragenden Back-up-Sensoren, wobei in jedem Schiffssicherheitsabschnitt (2, 3, 4) dezentrale Repeater installiert sind.

15. Elektrisches Netz nach einem der Ansprüche 1 bis 14, bei dem als Elektroenergieerzeugungseinheiten Brennstoffzellen (5) vorgesehen sind, mittels denen ein als DC-Netz ausgebildetes Hauptnetz (7) in Niederspannung und/oder Mittelspannung mit Gleichstrom versorgbar ist.

16. Elektrisches Netz nach einem der Ansprüche 1 bis 15, bei dem als Elektroenergieerzeugungseinheiten Solarzellen vorgesehen sind, mittels denen ein als DC-Netz ausgebildetes Hauptnetz (7) in Niederspannung und/oder Mittelspannung mit Gleichstrom versorgbar ist.

17. Elektrisches Netz nach einem der Ansprüche 1 bis 16, bei dem als Energiespeicher (18) Batterien, statische Speicher, wie Magnetspeicher und Kondensatoren und/oder rotierende Speicher vorgesehen sind, die vorzugsweise in einem Bordnetzzwischenkreis (15) angeordnet sind.

18. Elektrisches Netz nach einem der Ansprüche 1 bis 17, mit Netzkupplungen (10) und/oder Netzüberleitungen (13), in denen jeweils ein HTSL-Strombegrenzer (11), vorzugsweise mit einem in Reihe zugeordneten Leistungsschalter (12), angeordnet ist.

19. Elektrisches Netz nach einem der Ansprüche 1 bis 18, dessen HTSL-Strombegrenzer (11) einen Supraleiter aus YbaCuO-Verbindungen, der in Dünnfilmtechnik ausgeführt ist, und als kryogene Flüssigkeit Flüssigstickstoff aufweist.

20. Elektrisches Netz nach einem der Ansprüche 1 bis 19, mit Abzweigen (16), in denen Halbleiterschalter (17, 25), vorzugsweise mit einem in Reihe zugeordneten Leistungsschalter (12), angeordnet sind.

21. Elektrisches Netz nach einem der Ansprüche 1 bis 20, in dessen ein Hauptnetz (7) mit Bordnetzzwischenkreisen (15) verbindenden Abzweigen (16) Halbleiterschalter (17, 25) angeordnet sind.

22. Elektrisches Netz nach einem der Ansprüche 1 bis 21, in dessen Bordnetz-Hauptgruppen (21) zugeordneten Verbraucherabzweigen (22) Halbleiterschalter angeordnet sind.

23. Elektrisches Netz nach einem der Ansprüche 1 bis 22, bei dem Quellen in Form von Elektroenergieerzeugungseinheiten oder Energiespeichern (18) mittels Halbleiterschaltern (25) schützbar sind.

24. Elektrisches Netz nach einem der Ansprüche 1 bis 23, dessen Halbleiterschalter (17, 25) als Schaltelemente IGCTs (Integrated Gate Commutated Thyristors), GTOs (Gate Turn-Off Thyristors), IGBTs (Insulated Gate Bipolar Transistors) oder MOS-Transistoren ausgebildet sind.

25. Elektrisches Netz nach Anspruch 24, bei dem als IGCTs ausgebildete Schaltelemente der Halbleiterschalter (17, 25) mittels Snubberschaltungen geschützt sind.

26. Elektrisches Netz nach einem der Ansprüche 1 bis 25, dessen Schaltanlagenteile durch AC- oder Mittelfrequenzschaltnetzteile galvanisch getrennt sind.

## Claims

1. Electrical power supply system for underwater vessels and surface vessels, for example marine vessels, and for offshore installations, which is in the form of an electrical vessel power supply system and/or traction power supply system comprising AC, DC or AC and DC power supply systems, and comprises electrical power generation units, distribution installations and load units, with the electrical power supply system (1) having current limiting appliances which are in the form of HTSL (high-temperature superconducting) current limiters (11) and/or semiconductor switches (17, 25), and by means of which the reaction of voltage dips in the event of a short circuit on unaffected parts of the power supply system can be restricted to a time period in the region of a few milliseconds, in particular <1 ms, and voltage dips such as these can therefore be restricted to the respectively affected part of the power supply system, **characterized in that** the electrical power supply system can be switched from a normal state, in which it is in the form of a meshed electrical power supply system, to a special state, in which it is in the form of a radial power supply system, and in which the effectiveness of the current limiting appliances is ensured.

2. Electrical power supply system according to Claim 1, having current limiting appliances which each include an HTSL current limiter (11) and a semiconductor switch (17, 25) and/or a circuit breaker (12), by means of which, in particular, power sources in the form of electrical power generation units and/or energy stores (18) can be protected.

3. Electrical power supply system according to Claim 1 or 2, whose HTSL current limiters (11) are combined with secondary protective devices which act on the circuit breakers (12), in that a signal generated by the HTSL current limiter (11) acts on the latter.

4. Electrical power supply system according to one of Claims 1 to 3, which is in the form of a radial power supply system with current/time staggering, in whose power supply system couplings (10) and/or crossover lines (13) the current limiting appliances are arranged.

5. Electrical power supply system according to one of Claims 1 to 4, whose current limiting appliances are arranged such that current selectivity can be achieved by means of them in conjunction with the power supply system configuration.

6. Electrical power supply system according to one of Claims 1 to 5, which is in the form of a radial network with as little meshing as possible.

7. Electrical power supply system according to one of Claims 1 to 5, which is in the form of a radial network with reaction-free meshing.

8. Electrical power supply system according to Claim 7, in which the reaction-free meshing is provided by means of diode-decoupled feeding of DC switchgear installations or DC loads from two different vessel safety sections (2, 3, 4).

9. Electrical power supply system according to one of Claims 1 to 8, whose individual switching devices have a communication device, by means of which contact can be made with a superordinate switch, which trips without any time delay, in the event of a failure of the switching device.

10. Electrical power supply system according to one of Claims 1 to 9, whose automation and control device has an on-time diagnosis unit with a high computation speed, which preferably operates on a self-learning basis, using elements of fuzzy logic or of a neural network.

11. Electrical power supply system according to Claim 10, in which a sensor or signaling unit is provided at each potential fault location, by means of which an appliance state associated with the respective fault location or a physical variable associated with the respective fault location can be detected, and can be passed to the on-time diagnosis unit of the automation and control device.

12. Electrical power supply system according to Claim 11, in which the sensor or signaling units are independent of any supply from their fault locations.

13. Electrical power supply system according to Claim 11 or 12, in which the connection between the on-time diagnosis unit of the automation and control device and the sensor and/or signaling units is provided by means of wire-linked elements, for example control or bus cables in the form of copper lines or glass-fiber lines.

14. Electrical power supply system according to one of Claims 11 to 13, having back-up sensors which detect and transmit without the use of wires, with local repeaters being installed in each vessel safety section (2, 3, 4).

15. Electrical power supply system according to one of Claims 1 to 14, in which fuel cells (5) are provided as electrical power generation units, by means of which a main power supply system (7) which is in the form of a DC power supply system, can be supplied with direct current at low voltage and/or medium voltage.

16. Electrical power supply system according to one of Claims 1 to 15, in which solar cells are provided as electrical power generation units, by means of which a main power supply system (7) which is in the form of a DC power supply system, can be supplied with direct current at low voltage and/or medium voltage.

17. Electrical power supply system according to one of Claims 1 to 16, in which batteries, solid-state storage devices, such as magnetic stores and capacitors and/or rotating stores, are provided as energy stores (18), and are preferably arranged in a vessel power supply system intermediate circuit (15).

18. Electrical power supply system according to one of Claims 1 to 17, having power supply system couplings (10) and/or power supply system crossover lines (13) in each of which an HTSL current limiter (11) is arranged, preferably with a circuit breaker (12) associated with it in series.

19. Electrical power supply system according to one of Claims 1 to 18, whose HTSL current limiter (11) has a superconductor comprising YbaCuO compounds, which is designed using thin-film technology, and has liquid nitrogen as a cryogenic liquid.

20. Electrical power supply system according to one of Claims 1 to 19, having branches (16) in which semiconductor switches (17, 25) are arranged, preferably having a circuit breaker (12) associated with them in series.

21. Electrical power supply system according to one of Claims 1 to 20, in whose branches (16), which connect a main power supply system (7) to vessel power supply system intermediate circuits (15), semiconductor switches (17, 25) are arranged.

22. Electrical power supply system according to one of Claims 1 to 21, in whose load branches (22), which are associated with vessel power supply system main groups (21), semiconductor switches are arranged.

23. Electrical power supply system according to one of Claims 1 to 22, in which sources in the form of electrical energy generation units or energy stores (18) can be protected by means of semiconductor switches (25).

24. Electrical power supply system according to one of Claims 1 to 23, whose semiconductor switches (17, 25) are in the form of switching elements such as IGCTs (Integrated Gate Commutated Thyristors), GTOs (Gate Turn-Off Thyristors), IGBTs (Insulated Gate Bipolar Transistors) or MOS transistors.

25. Electrical power supply system according to Claim 24, in which switching elements, which are in the form of IGCTs, of the semiconductor switches (17, 25) are protected by means of snubber circuits.

26. Electrical power supply system according to one of Claims 1 to 25, whose switchgear assembly parts are galvanically isolated by means of AC or medium-frequency switched-mode power supply units.

## Revendications

1. Réseau électrique pour des bâtiments de navigation sous-marins et en surface, par exemple pour des navires de marine, ainsi que pour des installations off-shore, qui est constitué en tant que réseau électrique de bord et/ou , de réseaux de traction composé de réseaux AC, DC ou AC et DC et d'unités de production d'énergie électrique, d'installations de distributeurs et d'unités de consommateurs, le réseau ( 1 ) électrique ayant des appareils de limitation du courant qui sont constitués en limiteur ( 11 ) de courant SCHT ( supraconducteur à haute température ) et/ou de commutateurs ( 17, 25 ) à semi-conducteurs et au moyen desquels la répercussion de chutes de tension, en cas de court-circuit sur des parties du réseau qui ne sont pas concernées, peut être limitée à un laps de temps dans le domaine bas des millisecondes, en étant notamment inférieur à une milliseconde, et ainsi des chutes de tension de ce genre peuvent être limitées à la partie du réseau concernée respectivement, **caractérisé en ce que** le réseau électrique peut être commuté d'un état normal, dans lequel il est constitué sous la forme d'un réseau électrique maillé, à un état particulier, dans lequel il est constitué sous la forme d'un réseau à structure radiale et dans lequel l'efficacité des appareils de limitation du courant est assurée.

2. Réseau électrique suivant la revendication 1, ayant des appareils de limitation du courant dont font partie respectivement un limiteur ( 11 ) de courant SCHT et un commutateur ( 17, 25 ) à semi-conducteur et/ou un disjoncteur ( 12 ), au moyen desquels notamment des sources d'énergie sous forme d'unités de production d'énergie électrique et/ou d'accumulateurs ( 18 ) d'énergie peuvent être protégées.

3. Réseau électrique suivant la revendication 1 ou 2, dont le limiteur ( 11 ) de courant SCHT est combiné à des dispositifs de protection secondaires agissant sur les disjoncteurs ( 12 ) par le fait qu'un signal produit par le limiteur ( 11 ) de courant SCHT agit sur ceux-ci.

4. Réseau électrique suivant l'une des revendications 1 à 5, qui est constitué en réseau à structure radiale, ayant un échelonnement courant/temps, dans les couplages ( 10 ) de réseau et/ou les transitions ( 13 ) de réseau duquel les appareils de limitation du courant sont montés.

5. Réseau électrique suivant l'une des revendications 1 à 4, dont les appareils de limitation du courant sont disposés de façon à ce qu'au moyen de ceux-ci on peut obtenir, en coopération avec la configuration de réseau, une sélectivité du courant.

6. Réseau électrique suivant l'une des revendications 1 à 5, qui est conçu en réseau à structure radiale, ayant un maillage aussi petit que possible.

7. Réseau électrique suivant l'une des revendications 1 à 5, qui est conçu en réseau à structure radiale, ayant un maillage sans réaction.

8. Réseau électrique suivant la revendication 7, dans lequel le maillage sans réaction est réalisé au moyen d'alimentation, découplée par diode, d'installations de commutation DC ou de consommateurs DC de deux parties ( 2, 3, 4 ) de sécurité de navire différentes.

9. Réseau électrique suivant l'une des revendications 1 à 8, dont les divers appareils de commutation ont un dispositif de communication, au moyen duquel un interrupteur supérieur hiérarchiquement et à déclenchement sans retard peut être contacté si l'appareil de commutation est défaillant.

10. Réseau électrique suivant l'une des revendications 1 à 9, dont le dispositif d'automatisation et de régulation a une unité de diagnostic en temps réel, ayant une grande vitesse de calcul qui fonctionne, de préférence, avec auto-apprentissage, en utilisant des éléments d'une logique floue ou d'un réseau neuronal.

11. Réseau électrique suivant la revendication 10, dans lequel, en chaque point de défaut potentiel, est prévu une unité de capteur ou d'avertissement, au moyen de laquelle un état d'appareil associé au point de défaut respectif ou une grandeur physique associée au point de défaut respectif peut être détecté et être communiqué à l'unité de diagnostic en temps réel du dispositif d'automatisation et de régulation.

12. Réseau électrique suivant la revendication 11, dans lequel, les unités de capteur ou d'avertissement dépendent pour l'alimentation de leur point de défaut.

13. Réseau électrique suivant la revendication 11 ou 12, dans lequel la liaison entre l'unité de diagnostic en temps réel du dispositif d'automatisation et de régulation et les unités de capteur ou d'avertissement est réalisée au moyen d'éléments à liaison par fil, par exemple sous la forme de lignes de câbles de commande ou de câbles de bus, constituées sous la forme de lignes de cuivre ou de fibres optiques.

14. Réseau électrique suivant l'une des revendications 11 à 13, ayant des capteurs back-up détectant sans fil et transmettant sans fil, des répéteurs décentralisés étant installés dans chaque partie ( 2, 3, 4 ) de sécurité du navire.

15. Réseau électrique suivant l'une des revendications 1 à 14, dans lequel il est prévu, comme unités de production d'énergie électrique, des piles à combustible ( 5 ), au moyen desquelles un réseau ( 7 ) principal constitué sous la forme d'un réseau DC peut être alimenté en courant continu à basse tension et/ou à moyenne tension.

16. Réseau électrique suivant l'une des revendications 1 à 15, dans lequel il est prévu, comme unités de production d'énergie électrique, des piles solaires au moyen desquelles un réseau ( 7 ) principal constitué sous la forme d'un réseau DC peut être alimenté en courant continu à basse tension et/ou à moyenne tension.

17. Réseau électrique suivant l'une des revendications 1 à 16, dans lequel il est prévu, comme accumulateurs ( 18 ) d'énergie, des batteries, des accumulateurs statiques, comme des accumulateurs magnétiques et des condensateurs et/ou des accumulateurs tournants, qui sont montés de préférence dans un circuit ( 15 ) intermédiaire de réseau de bord.

18. Réseau électrique suivant l'une des revendications 1 à 17, ayant des couplages ( 10 ) de réseau et/ou des transitions ( 18 ) de réseau, dans lesquels est monté respectivement un limiteur ( 11 ) de courant SCHT, ayant de préférence un disjoncteur ( 12 ) associé en série.

19. Réseau électrique suivant l'une des revendications 1 à 18, dont le limiteur ( 11 ) de courant SCHT a un supraconducteur en composé YbaCuO, qui est réalisé en technique en couche mince, et de l'azote liquide comme liquide cryogène.

20. Réseau électrique suivant l'une des revendications 1 à 19, comprenant des dérivations ( 16 ) dans lesquelles sont montées des commutateurs ( 17, 25 ) à semi-conducteurs, ayant de préférence un disjoncteur ( 12 ) associé en série.

21. Réseau électrique suivant l'une des revendications 1 à 20, dans lequel des commutateurs ( 17, 25 ) à semi-conducteurs sont montés dans des dérivations ( 16 ) reliant un circuit ( 7 ) principal à des circuits ( 15 ) intermédiaires de bord.

22. Réseau électrique suivant l'une des revendications 1 à 21, dans lequel des commutateurs à semi-conducteurs sont montés dans des dérivations ( 22 ) de consommateur associés à des groupes ( 21 ) principaux de réseau de bord.

23. Réseau électrique suivant l'une des revendications 1 à 22, dans lequel des sources, sous la forme d'unités de production d'énergie électrique ou d'accumulateurs ( 18 ) d'énergie, peuvent être protégées au moyen de commutateurs ( 25 ) à semi-conducteurs.

24. Réseau électrique suivant l'une des revendications 1 à 23, dont les commutateurs ( 17, 25 ) à semi-conducteurs sont constitués sous la forme d'éléments de commutation IGCT ( Integrated Gate Commutated Thyristors ), de GTO ( Gate Turn-Off Thyristors ), d'IGBT ( Insulated Gate Bipolar Transistors ) ou de transistors MOS.

25. Réseau électrique suivant la revendication 24, dans lequel des éléments de commutation, constitués en IGCT, des commutateurs ( 17, 25 ) à semi-conducteurs sont protégés au moyen de circuits d'amortissement.

26. Réseau électrique suivant l'une de revendications 1 à 25, dont des parties d'installation de distribution sont séparées galvaniquement par des parties de réseau de commutation AC ou en moyenne fréquence.
